# EUROPÄISCHE PATENTSCHRIFT

(11) **EP 2 873 525 B1**
(45) Veröffentlichungstag und Bekanntmachung des Hinweises auf die Patenterteilung: **07.10.2020**
(21) Anmeldenummer: 14191440.8
(22) Anmeldetag: 03.11.2014
(51) Int. Cl.: B32B 27/32, B32B 1/08, F16L 11/115, F16L 11/24

(54) **Schlauchleitung zum Fluidtransport**
Hose for fluid transport
Conduite flexible destinée au transport fluidique

(30) Priorität: 18.11.2013 DE 202013105199 U
(43) Veröffentlichungstag der Anmeldung: 20.05.2015
(73) Patentinhaber: REHAU AG + Co, 95111 Rehau (DE)
(72) Erfinder: Wazlawik, Klaus, 95030 Hof (DE); Zahn, Cornelia, 96047 Bamberg (DE); Lorenscheit, Dagmar, 95194 Regnitzlosau (DE); Beyer, Klaus, 95111 Rehau (DE); Hübner, Christian, 95466 Neunkirchen am Main (DE); Schörner, Georg, 95111 Rehau (DE)

(56) Entgegenhaltungen:
- DE-B- 1 261 716
- GB-A- 2 325 040

## Beschreibung

Die Erfindung betrifft eine Schlauchleitung zum Transport von Trinkwasser.

Schlauchleitungen für Trinkwasser wurden früher aus Weich-PVC oder Gummi-Materialien hergestellt. Im Vordergrund steht bei Kunststoff-Schlauchleitungen einerseits eine ausreichend große Flexibilität der Leitung und andererseits eine möglichst geringe Beeinflussung der Trinkwasserqualität durch die verwendeten Polymer-Materialien. Seit geraumer Zeit werden Trinkwasserschläuche aus diversen Polyolefin-Materialien, wie z.B. Polyethylen, Polypropylen, diverse Ethylen- oder Propylen-Copolymere, oder aber auch aus speziellen TPE (Thermoplastischen Elastomeren) hergestellt. Dies erfolgt insbesondere vor dem Hintergrund der Anforderungen der Deutschen Trinkwasserverordnung. Im Rahmen dieser Trinkwasserverordnung sind u.a. die Hygienestandards gemäß "Technische Regel Arbeitsblatt W270" des Deutschen Vereins des Gas- und Wasserfaches (DVGW) sowie die "Leitlinie zur hygienischen Beurteilung von organischen Materialien in Kontakt mit Trinkwasser (KTW-Leitlinie)" des deutschen Umweltbundesamtes zu erfüllen.

Die DE 20 2010 006 308 U1 schlägt zur Erfüllung der entsprechenden Regeln bzw. Leitlinien die Verwendung eines thermoplastischen Elastomers auf Styrolbasis (TPE-S) vor. Auch in der EP 2 032 352 B1 werden thermoplastische Elastomere als Innenschicht für eine armierte Schlauchleitung zum Transport von flüssigen Nahrungsmitteln vorgeschlagen.

In der EP 2 412 518 B1 ist der Einsatz von Ethylen-α-Olefin-Block-Copolymeren in der Innenschicht einer flexiblen Schlauchleitung für Sanitäranwendungen beschrieben.

Sofern der innere Schlauchdurchmesser vergleichsweise gering ist, beispielsweise 1/2" oder 3/4", gewährleisten die beschriebenen Materialien eine zufriedenstellend hohe Flexibilität der Schlauchleitung. Bei größeren Schlauch-Innendurchmessern ist die relativ geringe Flexibiltät der genannten Polymer-Materialien jedoch problematisch, was sich insbesondere auch bei textilarmierten Schlauchausführungen mit entsprechend hohen Wanddicken nachteilig auswirkt. Die Handhabung solcher Schlauchleitungen mit großem Innendurchmesser, insbesondere beim Überbrücken von engwinkeligen Anschlusssituationen zwischen den beiden Schlauchenden, ist aufgrund der geringen Biegefähigkeit hier sehr schwierig oder praktisch unmöglich. Dies betrifft insbesondere Zulauf-, Füll- und Versorgungsschläuche für die Befüllung von mobilen Trinkwasseranlagen gemäß DIN 2001-2, sowie für sonstige Trinkwassertanks, -behälter und -speicher. Daneben finden sich solche Anschlusssituationen auch insbesondere bei Saugschläuchen für Trinkwasserbrunnen, - becken, -behälter und -reservoirs.

Aus der DE 1 261 716 B ist ein mit einem spiralförmigen Draht armierter Saugschlauch für Staubsauger bekannt. Die GB 2 325 040 A zeigt einen mit einem schraubenförmigen Verstärkungselement versehenen Schlauch zum Transport von Kuhmilch.

Der Erfindung liegt die Aufgabe zugrunde, eine Schlauchleitung zum Transport von Trinkwasser, bereitzustellen, welche einerseits den aktuellen hygienetechnischen Standards entspricht und andererseits auch bei großen Schlauchinnendurchmessern eine zufriedenstellend hohe Flexibilität aufweisen.

Erfindungsgemäß wird die Aufgabe gelöst durch eine Schlauchleitung mit den Merkmalen des Patentanspruchs 1. Erfindungsgemäß wird zwar die mit dem zu transportierenden Fluid beaufschlagte Innenschicht unverändert aus bereits bewährten Kunststoff-Materialien hergestellt, welche den Hygienestandards entsprechen. Insbesondere entsprechen sowohl das Kunststoff-Material der Innenschicht als auch das Kunststoff-Hartmaterial des Armierungsbandes den Anforderungen der "Technischen Regel Arbeitsblatt W270" des Deutschen Vereins des Gas- und Wasserfaches (DVGW) sowie der "Leitlinie zur hygienischen Beurteilung von organischen Materialien in Kontakt mit Trinkwasser (KTW-Leitlinie)" des deutschen Umweltbundesamtes. So kann beispielsweise das Material der Innenschicht ein Ethylen-Copolymer und / oder ein Propylen-Copolymer und / oder ein thermoplastisches Elastomer (TPE) sein. Insbesondere kann es sich bei dem Material der Innenschicht um ein Ethylen-Octen-Copolymer und / oder ein Ethylen-Alpha-Olefin-Block-Copolymer handeln. Sofern das Material der Innenschicht ein TPE enthält, kann dieses ein TPE-S und / oder ein TPE-V sein. Diese speziellen Ausführungsformen thermoplastischer Elastomere sind beispielsweise in dem Buch "Kunststoffchemie für Ingenieure", Carl Hanser Verlag München Wien, ISBN 3-446-22069-0 im Abs. 13.2 ausführlich beschrieben. Die Innenschicht kann jedoch im Rahmen der erfindungsgemäßen Lehre eine vergleichsweise geringe Wanddicke besitzen, so dass auch bei größeren Schlauch-Innendurchmessern eine ausreichend hohe Flexibilität gegeben ist. Um eine ausreichende Knickstabilität zu gewährleisten und damit ein Kollabieren der Schlauchleitung auch bei engen Biegeradien sicher auszuschließen, ist die Innenschicht erfindungsgemäß außenseitig mit einem schraubenförmig verlaufenden Armierungsband aus einem Kunststoff-Hartmaterial versehen. Dieses Kunststoff-Hartmaterial kann ein PE-HD und / oder ein PE-LD und / oder ein PE-/LLD sein. Durch den erfindungsgemäßen Aufbau der Schlauchleitung aus einer schraubenförmigen Wicklung eines entsprechenden Koextrusionsprofils, welches randseitig zur die Innenschicht bildenden Rohrgeometrie verschweißt ist, muss nur ein vergleichsweise einfach herzustellendes Extrusionsprofil gefertigt werden. Dieses weist als Basis einen entsprechenden Abschnitt der Innenschicht und ein hiermit coextrudiertes Armierungsband auf. Insbesondere ist es mittels des beschriebenen Fertigungsverfahrens möglich, eine Schlauchleitung mit nur relativ geringer Wandstärke der Innenschicht zu fertigen, welche gleichzeitig mit einem die Knickstabilität der Schlauchleitung gewährleistenden Armierungsband versehen ist.

Alternativ zur Verwendung eines PE kann das Kunststoff-Hartmaterial des Armierungsbandes auch ein PP, insbesondere ein PP-Homopolymer und / oder ein PP-Block-Copolymer und / oder ein PP-Random-Copolymer und / oder ein thermoplastisches PP- Blend sein. Erfindungsgemäß erfolgt die Verbindung von Armierungsband und dem entsprechenden Material der Innenschicht im Wege einer Coextrusion der beiden Komponenten zum entsprechenden Extrusionsprofil, welches dann an seinen äußeren Rändern zur Schlauchleitung verschweißt wird. Erfindungsgemäß sind die verschweißten Ränder des Extrusionsprofils schräg zur Schlauchleitungsachse ausgerichtet. Hierdurch wird die Schweißfläche gegenüber einer senkrechten Ausrichtung dieser Ränder vergrößert.

Wie bereits beschrieben, ist die erfindungsgemäße Schlauchleitung insbesondere bei großen Schlauchinnendurchmessern von Vorteil. So beträgt der durch die innere Oberfläche der schraubenförmig gewickelten Innenschicht definierte Innendurchmesser der Schlauchleitung zweckmäßigerweise mindestens 20 mm, z.B. mindestens 30 mm, insbesondere mindestens 40 mm. Der axiale Abstand zwischen den schraubenförmigen Wicklungen der Armierungsbandes kann 1 bis 10 mm, z.B. 2 bis 5 mm, insbesondere 3 bis 4 mm, betragen. Hierdurch ist einerseits eine hohe Knickstabilität und andererseits eine dennoch hohe Flexibilität der Schlauchleitung sichergestellt. Die radiale Dicke des Armierungsbandes kann 1 bis 5 mm, z.B. 2 bis 4 mm, betragen. Diese Dicke entspricht bei einem halbkreisförmigen Querschnitt des Armierungsbandes dem Kreisradius. Die Dicke der Innenschicht ist - wie bereits beschrieben - vergleichsweise klein und beträgt zweckmäßigerweise 0,1 bis 1 mm, z.B. 0,2 bis 0,5 mm.

Die erfindungsgemäße Schlauchleitung wird insbesondere als Zulauf-, Füll- oder Versorgungsschlauch für die Befüllung von mobilen Trinkwasseranlagen, beispielsweise gemäß DIN 2001-2, eingesetzt. Weitere Anwendungsfälle sind der Anschluss an Trinkwassertanks, -behälter, -speicher sowie Saugschläuche für Trinkwasserbrunnen, -becken, -behälter, -reservoirs. Allgemein gesprochen zeichnet sich die Schlauchleitung insbesondere bei Anwendungen aus, die einen großen Schlauchinnendurchmesser erfordern und bei denen einerseits die Flexibiltät und andererseits die Knickstabilität der Schlauchleitung von Bedeutung sind. Die Betriebsdrücke reichen im Allgemeinen von geringem Überdruck bis hin zu Anwendungen bei geringem oder auch hohem Vakuum.

Im Folgenden wird die Erfindung anhand einer lediglich ein Ausführungsbeispiel darstellenden Zeichnung ausführlich erläutert.

Es zeigen schematisch:
- Fig. 1: eine erfindungsgemäße Schlauchleitung in einer dreidimensionalen Darstellung und
- Fig. 2: den Schnitt A-A durch die Schlauchleitung in Fig. 1.

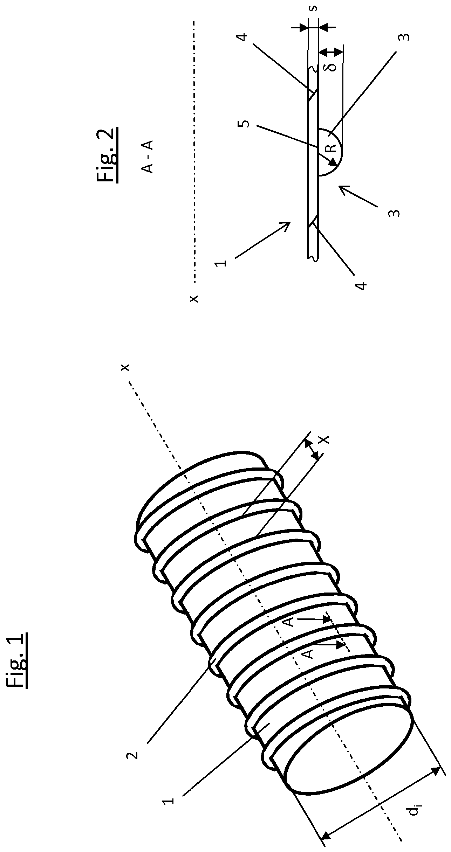

Die Fig. 1 zeigt eine Schlauchleitung zum Transport von Trinkwasser mit einer mit dem zu transportierenden Fluid beaufschlagten flexiblen Innenschicht 1 aus Kunststoff und einem schraubenförmig um die Schlauchleitungsachse x und die Innenschicht 1 verlaufenden Armierungsband 2 aus einem mit der Innenschicht 1 coextrudierten Kunststoff-Hartmaterial. Insbesondere einer vergleichenden Betrachtung der Fig. 1 und 2 ist zu entnehmen, dass die Schlauchleitung aus einem entsprechenden, zwei Komponenten aufweisenden Koextrusionsprofil 3 aufgebaut ist, das schraubenförmig gewickelt und an seinen äußeren Rändern 4 zu einer die Innenschicht 1 bildenden Rohrgeometrie verschweißt ist.

Im Ausführungsbeispiel besteht die Innenschicht 1 aus einem Ethylen-Octen-Copolymer. Als Kunststoff-Hartmaterial des Armierungsbandes 2 wird hingegen ein PE-HD mit einer Dichte von 0,95 g/cm³, MFR (190/2,16) 0,3 g/10 min sowie einem Zug-E-Modul 1.150 MPa verwendet. Alternativ hierzu kann das Armierungsband 2 auch aus einem PE-LLD, Dichte 0,925 g/cm³, MFR (190/2,16) 0,7 g/10 min, Zug-E-Modul 250 MPa bestehen.

Insbesondere der Fig.2 ist zu entnehmen, dass das Armierungsband 2 einen halbkreisförmigen Querschnitt aufweist, dessen gerade Seite 5 mit dem Material der Innenschicht 1 verbunden ist. Die radiale Dicke δ des Armierungsbandes beträgt 3 mm, wobei dies im Ausführungsbeispiel dem entsprechenden Kreisradius R des Armierungsbandes 2 entspricht. Die Fig. 2 zeigt ferner, dass die verschweißten Ränder 4 des Koextrusionsprofils 3 schräg zur Schlauchleitungsachse x ausgerichtet sind.

Der von der inneren Oberfläche der schraubenförmig gewickelten Innenschicht 1 definierte Innendurchmesser dᵢ der Schlauchleitung beträgt im Ausführungsbeispiel mindestens 35 mm. Der lichte - also den Freiraum definierende (s. Fig. 1) - axiale Abstand X zwischen den schraubenförmigen Wicklungen des Armierungsbandes 2 beträgt ca. 3 mm, so dass einerseits eine gute Knickstabilität und andererseits eine ausreichend hohe Flexibilität der Schlauchleitung sichergestellt sind. Zur Gewährleistung der hohen Flexibilität ist die Innenschicht 1 ferner vergleichsweise dünn ausgebildet und weist im Ausführungsbeispiel eine Dicke s von ca. 0,3 mm auf.

Die beschriebene Schlauchleitung wird im Ausführungsbeispiel als Zulaufschlauch für die Befüllung einer mobilen Trinkwasseranlage gemäß DIN 2001-2 eingesetzt. Andere Anwendungen der erfindungsgemäßen Schlauchleitung werden hierdurch jedoch nicht ausgeschlossen.

## Patentansprüche

1. Schlauchleitung zum Transport von Trinkwasser, mit
- einer mit dem zu transportierenden Fluid beaufschlagbaren flexiblen Innenschicht (1) aus Kunststoff und
- mindestens einem schraubenförmig um die Schlauchachse (x) und außenseitig um die Innenschicht (1) verlaufenden Armierungsband (2) aus einem mit der Innenschicht (1) coextrudierten Kunststoff-Hartmaterial,
wobei das Armierungsband (2) einen zumindest im Wesentlichen halbkreisförmigen Querschnitt aufweist, dessen gerade Seite (5) mit dem Material der Innenschicht (1) verbunden ist,
wobei die Schlauchleitung aus einem entsprechenden, mindestens zwei Komponenten aufweisenden Extrusionsprofil (3) aufgebaut ist, das schraubenförmig gewickelt und lediglich an seinen äußeren Rändern (4) zu einer die Innenschicht (1) bildenden Rohrgeometrie verschweißt ist und
wobei die verschweißten Ränder (4) des Extrusionsprofils (3) schräg zur Schlauchleitungsachse (x) ausgerichtet sind, wodurch sich die Schweißfläche gegenüber einer senkrechten Ausrichtung dieser Ränder (4) vergrößert.

2. Schlauchleitung nach Anspruch 1, **dadurch gekennzeichnet, dass** das Material der Innenschicht (1) ein Ethylen-Copolymer und/oder ein Propylen-Copolymer und/oder ein thermoplastisches Elastomer (TPE) ist.

3. Schlauchleitung nach Anspruch 2, **dadurch gekennzeichnet, dass** das Material der Innenschicht (1) ein Ethylen-Octen-Copolymer und/oder ein Ethylen-α-Olefin-Block-Copolymer ist.

4. Schlauchleitung nach Anspruch 2, **dadurch gekennzeichnet, dass** das Material der Innenschicht (1) ein TPE-S und/oder ein TPE-V ist.

5. Schlauchleitung nach einem der Ansprüche 1 bis 4, **dadurch gekennzeichnet, dass** das Kunststoff-Hartmaterial des Armierungsbandes (2) ein PE-HD und/oder ein PE-LD und/oder ein PE-LLD ist.

6. Schlauchleitung nach einem der Ansprüche 1 bis 4, **dadurch gekennzeichnet, dass** das Kunststoff-Hartmaterial des Armierungsbandes (2) ein PP, insbesondere ein PP-Homopolymer und/oder ein PP-Block-Copolymer und/oder ein PP-Random-Copolymer und/oder ein thermoplastisches PP-Blend ist.

7. Schlauchleitung nach einem der Ansprüche 1 bis 6, **dadurch gekennzeichnet, dass** der durch die innere Oberfläche der schraubenförmig gewickelten Innenschicht (1) definierte Innendurchmesser (dᵢ) der Schlauchleitung mindestens 20 mm, z.B. mindestens 30 mm, insbesondere mindestens 40 mm, beträgt.

8. Schlauchleitung nach einem der Ansprüche 1 bis 7, **dadurch gekennzeichnet, dass** der lichte axiale Abstand (X) zwischen den schraubenförmigen Wicklungen des Armierungsbandes (2) 1 bis 10 mm, z.B. 2 bis 5 mm, insbesondere 3 bis 4 mm, beträgt.

9. Schlauchleitung nach einem der Ansprüche 1 bis 8, **dadurch gekennzeichnet, dass** die radiale Dicke (δ) des Armierungsbandes (2) 1 bis 5 mm, z.B. 2 bis 4 mm, beträgt.

10. Schlauchleitung nach einem der Ansprüche 1 bis 9, **dadurch gekennzeichnet, dass** die Dicke (s) der Innenschicht (1) 0,1 bis 1 mm, z.B. 0,2 bis 0,5 mm, beträgt.

## Claims

1. Hose line for transporting drinking-water, with
- a flexible inner layer (1) of plastics material which can be acted upon by the fluid to be transported, and
- at least one reinforcing band (2), running helically around the hose axis (x) and on the outside around the inner layer (1), said band being made of a rigid plastics material coextruded with the inner layer (1),
wherein the reinforcing band (2) has an at least substantially semicircular cross-section, the straight side (5) of which is connected to the material of the inner layer (1),
wherein the hose line is constructed from a corresponding extruded profile (3) having at least two components which is wound helically and merely on its outer edges (4) is welded to form a tube geometry forming the inner layer (1), and
wherein the welded edges (4) of the extruded profile (3) are oriented obliquely to the hose line axis (x), as a result of which the welding surface is enlarged compared with a perpendicular orientation of these edges (4).

2. Hose line according to Claim 1, **characterised in that** the material of the inner layer (1) is an ethylene copolymer and/or a propylene copolymer and/or a thermoplastic elastomer (TPE).

3. Hose line according to Claim 2, **characterised in that** the material of the inner layer (1) is an ethylene/octene copolymer and/or an ethylene/α-olefin block copolymer.

4. Hose line according to Claim 2, **characterised in that** the material of the inner layer (1) is a TPE-S and/or a TPE-V.

5. Hose line according to one of Claims 1 to 4, **characterised in that** the rigid plastics material of the reinforcing band (2) is an HDPE and/or an LDPE and/or an LLDPE.

6. Hose line according to one of Claims 1 to 4, **characterised in that** the rigid plastics material of the reinforcing band (2) is a PP, in particular a PP homopolymer and/or a PP block copolymer and/or a PP random copolymer and/or a thermoplastic PP blend.

7. Hose line according to one of Claims 1 to 6, **characterised in that** the internal diameter (dᵢ) of the hose line, defined by the inner surface of the helically-wound inner layer (1), is at least 20 mm, e.g. at least 30 mm, in particular at least 40 mm.

8. Hose line according to one of Claims 1 to 7, **characterised in that** the internal axial distance (X) between the helical windings of the reinforcing band (2) is 1 to 10 mm, e.g. 2 to 5 mm, in particular 3 to 4 mm.

9. Hose line according to one of Claims 1 to 8, **characterised in that** the radial thickness (δ) of the reinforcing band (2) is 1 to 5 mm, e.g. 2 to 4 mm.

10. Hose line according to one of Claims 1 to 9, **characterised in that** the thickness (s) of the inner layer (1) is 0.1 to 1 mm, e.g. 0.2 to 0.5 mm.

## Revendications

1. Conduite en tuyau flexible servant au transport d'eau potable, avec
- une couche intérieure (1) flexible en matière plastique pouvant être soumise à l'action du fluide à transporter et
- au moins une bande d'armature (2) composée d'un matériau dur en matière plastique coextrudé avec la couche intérieure (1), s'étendant en forme de tuyau flexible autour de l'axe de tuyau flexible (x) et côté extérieur autour de la couche intérieure (1),
dans laquelle la bande d'armature (2) présente une section transversale au moins sensiblement en forme de demi-cercle, dont le côté rectiligne (5) est relié au matériau de la couche intérieure (1),
dans laquelle la conduite en tuyau flexible est élaborée à partir d'un profil d'extrusion (3) correspondant présentant au moins deux composants, qui est enroulé de manière hélicoïdale et est soudé seulement au niveau de ses bords extérieurs (4) en une géométrie tubulaire formant la couche intérieure (1), et
dans laquelle les bords (4) soudés du profil d'extrusion (3) sont orientés de manière oblique par rapport à l'axe de conduite en tuyau flexible (x), ce qui permet d'agrandir la surface de soudage par rapport à une orientation verticale desdits bords (4)

2. Conduite en tuyau flexible selon la revendication 1, **caractérisée en ce que** le matériau de la couche intérieure (1) est un copolymère d'éthylène et/ou un copolymère de propylène et/ou un élastomère thermoplastique (TPE).

3. Conduite en tuyau flexible selon la revendication 2, **caractérisée en ce que** le matériau de la couche intérieure (1) est un copolymère étyhylène-octène et/ou un copolymère en bloc éthylène-α-oléfine.

4. Conduite en tuyau flexible selon la revendication 2, **caractérisée en ce que** le matériau de la couche intérieure (1) est un TPE-S et/ou un TPE-V.

5. Conduite en tuyau flexible selon l'une quelconque des revendications 1 à 4, **caractérisée en ce que** le matériau dur en plastique de la bande d'armature (2) est un PE-HD et/ou un PE-LD et/ou un PE-LLD.

6. Conduite en tuyau flexible selon l'une quelconque des revendications 1 à 4, **caractérisée en ce que** le matériau dur en matière plastique de la bande d'armature (2) est un PP, en particulier un homopolymère de PP et/ou un copolymère en bloc de PP et/ou un copolymère statistique de PP et/ou un mélange thermoplastique de PP.

7. Conduite en tuyau flexible selon l'une quelconque des revendications 1 à 6, **caractérisée en ce que** le diamètre intérieur (dᵢ), défini par la surface intérieure de la couche intérieure (1) enroulée de manière hélicoïdale, de la conduite en tuyau flexible est d'au moins 20 mm, par exemple d'au moins 30 mm, en particulier d'au moins 40 mm.

8. Conduite en tuyau flexible selon l'une quelconque des revendications 1 à 7, **caractérisée en ce que** la petite distance axiale (X) entre les enroulements hélicoïdaux de la bande d'armature (2) va de 1 à 10 mm, par exemple de 2 à 5 mm, en particulier de 3 à 4 mm.

9. Conduite en tuyau flexible selon l'une quelconque des revendications 1 à 8, **caractérisée en ce que** l'épaisseur radiale (δ) de la bande d'armature (2) va de 1 à 5 mm, par exemple de 2 à 4 mm.

10. Conduite en tuyau flexible selon l'une quelconque des revendications 1 à 9, **caractérisée en ce que** l'épaisseur (s) de la couche intérieure (1) va de 0,1 à 1 mm, par exemple de 0,2 à 0,5 mm.
